# EUROPÄISCHE PATENTSCHRIFT

(11) **EP 3 760 980 B1**
(45) Veröffentlichungstag und Bekanntmachung des Hinweises auf die Patenterteilung: **18.05.2022**
(21) Anmeldenummer: 20163911.9
(22) Anmeldetag: 18.03.2020
(51) Int. Cl.: G01D 5/347, G01D 5/244, G01D 5/245

(54) **WINKELMESSEINRICHTUNG**
ANGLE MEASURING EQUIPMENT
DISPOSITIF DE MESURE D'ANGLE

(30) Priorität: 04.07.2019 DE 102019209862
(43) Veröffentlichungstag der Anmeldung: 06.01.2021
(73) Patentinhaber: Dr. Johannes Heidenhain GmbH, 83301 Traunreut (DE)
(72) Erfinder: MITTERREITER, Johann, 83339 Chieming (DE)

(56) Entgegenhaltungen:
- EP-A2- 2 489 988
- WO-A1-2018/150833
- DE-A1-102006 020 067
- US-A1- 2006 043 964

## Beschreibung

### GEBIET DER TECHNIK

Derartige Winkelmesseinrichtungen können beispielsweise an Spindeln oder Rundtischen montiert werden. Die betreffenden Spindeln oder Rundtische werden häufig in Bearbeitungsmaschinen beziehungsweise Bearbeitungszentren eingesetzt. Spindeln oder Motorspindeln halten in Werkzeugmaschinen häufig ein rotierendes Werkzeug, beispielsweise einen Fräser. An Rundtischen werden Werkstücke befestigt, die dann zum Beispiel spanabhebend bearbeitet werden. Ferner werden Rundtische in Messmaschinen verwendet, wobei in dieser Anwendung ein auf dem Rundtisch befestigtes Werkstück vermessen wird. Winkelmesseinrichtungen werden insbesondere bei Werkzeugmaschinen beziehungsweise Messmaschinen für die Messung von rotatorischen Bewegungen eingesetzt. Es besteht der zunehmende Wunsch die Leistungsfähigkeit derartiger Spindeln oder Rundtische, insbesondere die Präzision während des Betriebs, zu erhöhen.

### STAND DER TECHNIK

In der JP 2010-217167 A ist eine Messeinrichtung offenbart, die einen Encoder aufweist, der eine Drehzahlmessung einer Nabe erlaubt und zudem Signale erzeugt, welche Rückschlüsse auf eine axiale Belastung der Nabe erlauben.

Die Offenlegungsschrift US 2006/0043964 A1 offenbart ein Winkelmessgerät, bei dem Skalenstriche, die auf einer Scheibe angeordnet sind, durch mehrere Messköpfe abgetastet werden. Mit Hilfe der jeweiligen Ergebnisse der Einzelmessungen der Messköpfe wird rechnerisch eine Kalibration des Winkelmessgeräts vorgenommen.

Aus der DE 10 2006 020 067 A1 der Anmelderin ist eine Bauweise für Kupplung bekannt, die in einer herkömmlichen Winkelmesseinrichtung verwendet werden kann.

In der WO 2018 150833 A1 ist ein Winkelmessgerät gezeigt, welches einen ersten Positionserfassungssensor und einen zweiten Positionserfassungssensor aufweist. Der zweite Positionserfassungssensor ist als Abstandssensor ausgebildet, durch den exzentrizitätsbedingte radiale Abstandsänderungen zwischen dem zweiten Positionserfassungssensor und der Skalentrommel erfasst werden. Auf diese Weise können Exzentrizitätsfehler eliminiert werden, so dass eine Winkelmessung mit erhöhter Genauigkeit erreichbar ist.

### ZUSAMMENFASSUNG DER ERFINDUNG

Der Erfindung liegt die Aufgabe zugrunde eine Winkelmesseinrichtung zu schaffen, die es ermöglicht im laufenden Betrieb die Position einer Drehachse in mehreren Richtungen zu bestimmen.

Diese Aufgabe wird erfindungsgemäß durch die Merkmale des Anspruches 1 gelöst.

Demnach umfasst die Winkelmesseinrichtung eine erste Bauteilgruppe, eine zweite Bauteilgruppe sowie ein Lager. Die Bauteilgruppen sind relativ zueinander um eine Drehachse durch das Lager beziehungsweise mit Hilfe des Lagers drehbar angeordnet. Die erste Bauteilgruppe umfasst ein Skalenelement, das eine erste Teilung sowie eine zweite Teilung aufweist und optional eine weitere Teilung. Die zweite Bauteilgruppe weist eine erste Baueinheit auf, die ihrerseits zumindest einen Positionssensor aufweist, der dem Skalenelement mit einem Luftspalt gegenüber liegend angeordnet ist. Zudem weist die zweite Bauteilgruppe eine zweite Baueinheit auf, die einen ersten, zweiten, dritten, vierten, fünften und sechsten Positionsaufnehmer aufweist. Die Positionsaufnehmer sind ebenfalls dem Skalenelement mit einem Luftspalt gegenüber liegend angeordnet. Die zweite Bauteilgruppe weist darüber hinaus eine Ausgleichskupplung auf. Durch den zumindest einen Positionssensor ist die erste Teilung zur Bestimmung der relativen Winkelstellung zwischen den Bauteilgruppen abtastbar. Durch den ersten, zweiten und dritten Positionsaufnehmer ist die erste Teilung oder eine am Skalenelement angeordnete weitere Teilung zur Bestimmung einer Verschiebung des Skalenelements in einer Ebene, die insbesondere orthogonal zur Drehachse orientiert ist, abtastbar. Zudem ist durch den vierten, fünften und sechsten Positionsaufnehmer die zweite Teilung abtastbar zur quantitativen Bestimmung einer Verkippung (Verkippungswinkel) des Skalenelements beziehungsweise der Drehachse um eine Kippachse, die in der Ebene beziehungsweise parallel zu der Ebene liegt. Die erste Baueinheit ist mit Hilfe der Ausgleichskupplung mit der zweiten Baueinheit drehsteif aber axial und radial nachgiebig verbunden, so dass der Positionssensor relativ zu den Positionsaufnehmern drehsteif aber axial und radial nachgiebig angeordnet ist.

Der Begriff drehsteif ist im Folgenden so zu verstehen, dass bezogen auf die Umfangsrichtung die Lage des Positionssensors relativ zu den Positionsaufnehmern auch bei einer üblichen Belastung der Ausgleichskupplung unverändert bleibt. Dagegen wird durch die axiale und radiale Nachgiebigkeit der Ausgleichskupplung die Lage des Positionssensors relativ zu den Positionsaufnehmern bei einer üblichen Belastung der Ausgleichskupplung verändert. Insbesondere ist der Positionssensor relativ zum Skalenelement (axial und radial) unbeweglich angeordnet.

Durch die Verwendung der Begriffe Positionssensor und Positionsaufnehmer soll in erster Linie zum Ausdruck gebracht werden, dass diese Elemente an unterschiedlichen Baueinheiten montiert sind. Die betreffenden Elemente (Positionssensor, Positionsaufnehmer) können unterschiedlich oder identisch aufgebaut sein.

Durch den Positionssensor ist eine Winkelstellung des Skalenelements in Bezug auf die zweite Bauteilgruppe innerhalb einer Umdrehung hinweg absolut bestimmbar. Dies kann beispielsweise dadurch erreicht werden, dass die erste Teilung eine absolute Codespur aufweist oder aber dass auf dem Skalenelement eine Referenzmarke aufgebracht ist, die in Verbindung mit einer inkrementalen Teilung eine absolute Bestimmung der Winkelstellung innerhalb einer Umdrehung zulässt.

Die zweite Teilung kann als eine inkrementale Teilung oder als eine absolute Teilung ausgestaltet sein. Eine Ausgestaltung als absolute Teilung hat den

Vorteil, dass die axiale Position des Skalenelementes auch nach dem Einschalten des Winkelmessgerätes unmittelbar bestimmbar ist, was beispielsweise bei temperaturbedingten axialen Verlagerungen des Skalenelementes hilfreich sein kann.

Als Skalenelement kommt beispielsweise ein ringförmiger Körper in Betracht, der an einer Nabe befestigt werden kann. Alternativ können aber auch die erste und / oder die zweite Teilung direkt auf der Nabe aufgebracht sein. Der Positionssensor kann dem Skalenelement mit einem Luftspalt gegenüber liegend angeordnet sein, der sich in radialer oder axialer Richtung erstreckt. Ebenso können die Positionsaufnehmer dem Skalenelement jeweils mit einem Luftspalt gegenüber liegend angeordnet sein, der sich in radialer oder axialer Richtung erstreckt, wobei sich in diesem Fall die Größe des jeweiligen Luftspaltes durch belastungsbedingte Verlagerungen, Verschiebungen beziehungsweise Verkippungen unter Verformung der Ausgleichskupplung verändern kann.

Erfindungsgemäß umfasst die erste Teilung und die optionale weitere Teilung regelmäßige Strukturen, die entlang einer ersten Richtung parallel zueinander aneinandergereiht angeordnet sind. Dabei weist die erste Richtung eine Richtungskomponente in Umfangsrichtung auf und die zweite Teilung umfasst regelmäßige Strukturen, die entlang einer zweiten Richtung parallel zueinander aneinandergereiht angeordnet sind. Die zweite Richtung weist eine Richtungskomponente in axialer Richtung auf.

Die erste Richtung, entlang welcher die regelmäßigen Strukturen der ersten Teilung aneinandergereiht angeordnet sind, kann identisch mit der Umfangsrichtung sein. Genauso kann die erste Richtung zur Umfangsrichtung geneigt beziehungsweise schräg angeordnet sein (jedoch nicht senkrecht zur Umfangsrichtung). Ebenso kann die zweite Richtung, entlang welcher die regelmäßigen Strukturen der zweiten Teilung aneinandergereiht angeordnet sind, identisch mit der axialen Richtung (und damit parallel zur Drehachse) angeordnet sein. Genauso kann die zweite Richtung zur axialen Richtung geneigt beziehungsweise schräg angeordnet sein (jedoch nicht senkrecht zur axialen Richtung). Beispielsweise können die regelmäßigen Strukturen der ersten Teilung und die der zweiten Teilung pfeilförmig zueinander orientiert sein.

In weiterer Ausgestaltung der Erfindung weist die zweite Bauteilgruppe eine Lichtquelle auf und die erste Teilung und der Positionssensor sind so ausgestaltet, dass die relative Winkelstellung zwischen den Bauteilgruppen durch ein optisches Prinzip bestimmbar ist.

Vorteilhafterweise ist die Verschiebung des Skalenelements in der Ebene durch ein magnetisches Prinzip bestimmbar. In diesem Fall sind die Strukturen der Teilung des Skalenelements insbesondere als magnetische Strukturen ausgebildet, also als eine örtlich definierte Abfolge von magnetischen Nord- und Südpolen. Bei dieser Ausgestaltung sind der Positionssensor und / oder die Positionsaufnehmer als Magnetsensoren ausgestaltet. Der Positionssensor und / oder die Positionsaufnehmer können beispielsweise auf Basis eines magnetoresistiven Prinzips arbeiten oder als Hall-Positionsaufnehmer ausgestaltet sein. Alternativ können die Positionsaufnehmer auch auf einem optischen oder induktiven Messprinzip beruhen, wobei auch Kombinationen der Prinzipien möglich sind, so dass die erste Teilung nach einem anderen Prinzip abgetastet werden kann als die zweite Teilung.

Mit Vorteil sind die erste Teilung und die zweite Teilung zumindest teilweise überlagert angeordnet. Beispielsweise können die erste Teilung und die zweite Teilung an einer Mantelseite eines zylindrischen Skalenelements aufgebracht sein und die erste Teilung und die zweite Teilung bezüglich der axialen Richtung überlagert ausgestaltet sein. Insbesondere kann die erste Teilung als eine optisch abtastbare Teilung ausgestaltet sein und die zweite Teilung als eine magnetisch abtastbare Teilung.

In weiterer Ausgestaltung der Erfindung sind zumindest zwei der Positionsaufnehmer zur Bestimmung einer Verschiebung des Skalenelements in einem Zentriwinkel um die Drehachse von mindestens 90° versetzt angeordnet. Demnach sind also etwa der erste Positionsaufnehmer relativ zum zweiten oder relativ zum dritten Positionsaufnehmer in einem Zentriwinkel um die Drehachse von mindestens 90° versetzt angeordnet. Als Zentriwinkel ist ein Mittelpunktswinkel zu verstehen, wobei der betreffende Mittelpunkt auf der Drehachse liegt.

Vorteilhafterweise sind zumindest zwei der Positionsaufnehmer zur Bestimmung einer Verkippung des Skalenelements um die Kippachse in einem Zentriwinkel um die Drehachse von mindestens 90° versetzt angeordnet. Hier ist folglich beispielsweise der vierte Positionsaufnehmer relativ zum fünften oder relativ zum sechsten Positionsaufnehmer in einem Zentriwinkel um die Drehachse von mindestens 90° versetzt angeordnet.

In weiterer Ausgestaltung der Erfindung sind die Positionsaufnehmer und optional auch der Positionssensor entlang einer Kreislinie angeordnet.

Vorteilhafterweise umfasst die zweite Bauteilgruppe ein Gehäuse, wobei der Positionssensor sowie die mehreren Positionsaufnehmer innerhalb des Gehäuses angeordnet sind.

Mit Vorteil sind der Positionssensor und die Positionsaufnehmer mit einem elektronischen Baustein elektrisch verbunden, wobei durch den elektronischen Baustein die Winkelstellung des Skalenelements, die Verschiebung beziehungsweise die Position des Skalenelements in der Ebene senkrecht zur Drehachse und die Verkippung des Skalenelements bestimmbar sind. Optional kann zudem durch den elektronischen Baustein die axiale Position bestimmt werden.

Bei Spindeln oder Rundtischen, die naturgemäß entsprechend steif ausgestaltet sind, sind derartige Verkippungen vergleichsweise klein und liegen in Bereichen von weniger als einer Winkelminute relativ zur idealen Drehachse, beispielsweise 100 Winkelsekunden bis hinab zu 50 Winkelsekunden. Folglich liegen durch diese Verkippungen auch nur minimale Positionsänderungen vor, so dass die Positionsaufnehmer eine sehr hohe Auflösung haben müssen um verlässliche Aussagen beziehungsweise quantitative Werte bezüglich der Verkippungen liefern zu können. Dadurch, dass die Drehachse gegebenenfalls rotiert, kann die beschriebene Verkippung zu Taumelbewegungen des Skalenelements führen, wobei die Taumelbewegungen durch die Winkelmesseinrichtung insbesondere durch Hinzunahme der gemessenen Winkelstellung quantitativ festgehalten werden können.

Vorteilhafterweise weist die Winkelmesseinrichtung einen Speicherbaustein auf, der als Datenlogger verwendbar ist zur Speicherung von Information, die auf den vom Positionssensor und / oder den Positionsaufnehmern erzeugten Signalen beruht.

In weiterer Ausgestaltung der Erfindung ist der Positionssensor, durch welchen die erste Teilung abtastbar ist, gegenüber den Positionsaufnehmern, durch welche die zweite Teilung abtastbar ist, bezüglich der axialen Richtung versetzt angeordnet. Insbesondere kann der Positionssensor gegenüber dem vierten, fünften und sechsten Positionsaufnehmern versetzt angeordnet sein.

Mit Vorteil ist zumindest die zweite Teilung (oder beide Teilungen) auf einer Mantelseite eines zylindrischen Skalenelementes aufgebracht.

Durch die Winkelmesseinrichtung können also nicht nur eine Winkelstellung, sondern auch Achsverlagerungen z.B. eines Rundtisches online detektiert werden. Insbesondere basierend auf den Messwerten der Winkelstellung und der Position des Skalenelements in der Ebene senkrecht zur Drehachse kann eine Korrektur der Soll-Position im Bearbeitungs- beziehungsweise Messprozess durch eine Numerische Steuerung vorgenommen werden. Somit kann etwa die Position eines Werkstückes während der Bearbeitung korrigiert werden. Insbesondere kann die Winkelmesseinrichtung so konfiguriert sein, dass im Zusammenspiel mit einer Numerischen Steuerung Korrekturwerte erzeugt werden, die auf den durch die Winkelmesseinrichtung gemessenen Positionsdaten in Verbindung mit der absoluten Winkelstellung basieren.

Die Positionsaufnehmer können vorteilhafterweise eine Auflösung von weniger als 2 µm haben, insbesondere von weniger als 1 µm, insbesondere von weniger als 750 nm. Diese Werte für die Auflösungen können sowohl für die Bestimmung der axialen als auch der lateralen Positionen, also in der Ebene senkrecht zur Drehachse erreicht werden.

Durch die Winkelmesseinrichtung können also in Abhängigkeit einer gemessenen Winkelstellung Verlagerungen oder Bewegungen des Skalenelementes beziehungsweise der Drehachse in den übrigen fünf Freiheitsgraden quantitativ detektiert werden.

Das Skalenelement kann eine weitere Teilung aufweisen und das Skalenelement kann so ausgestaltet sein, dass die erste Teilung nach einem optischen Prinzip abtastbar ist und die weitere Teilung nach einem magnetischen Prinzip. Dabei können die erste Teilung und die weitere Teilung zumindest teilweise überlagert angeordnet sein. Beispielsweise können die erste Teilung und die weitere Teilung an einer Mantelseite eines zylindrischen Skalenelements aufgebracht sein und die erste Teilung und die weitere Teilung bezüglich der axialen Richtung überlagert ausgestaltet sein.

Vorteilhafte Ausbildungen der Erfindung entnimmt man den abhängigen Ansprüchen.

Weitere Einzelheiten und Vorteile der erfindungsgemäßen Winkelmesseinrichtung ergeben sich aus der nachfolgenden Beschreibung von Ausführungsbeispielen anhand der beiliegenden Figuren.

### KURZE BESCHREIBUNG DER ZEICHNUNGEN

Es zeigen die
- Figur 1: eine Explosions-Darstellung einer Winkelmesseinrichtung,
- Figur 2: eine weitere Explosions-Darstellung der Winkelmesseinrichtung,
- Figur 3: eine Draufsicht auf die Winkelmesseinrichtung,
- Figur 4: eine Teilschnittdarstellung der Winkelmesseinrichtung,
- Figur 5: eine weitere Teilschnittdarstellung der Winkelmesseinrichtung,
- Figur 6: eine Detailansicht eines Skalenelements der. Winkelmesseinrichtung gemäß einem ersten Ausführungsbeispiel,
- Figur 7: eine Detailansicht eines Skalenelements der. Winkelmesseinrichtung gemäß einem zweiten Ausführungsbeispiel,
- Figur 8: eine Detailansicht eines Skalenelements der. Winkelmesseinrichtung gemäß einem dritten Ausführungsbeispiel.

### BESCHREIBUNG DER AUSFÜHRUNGSFORMEN

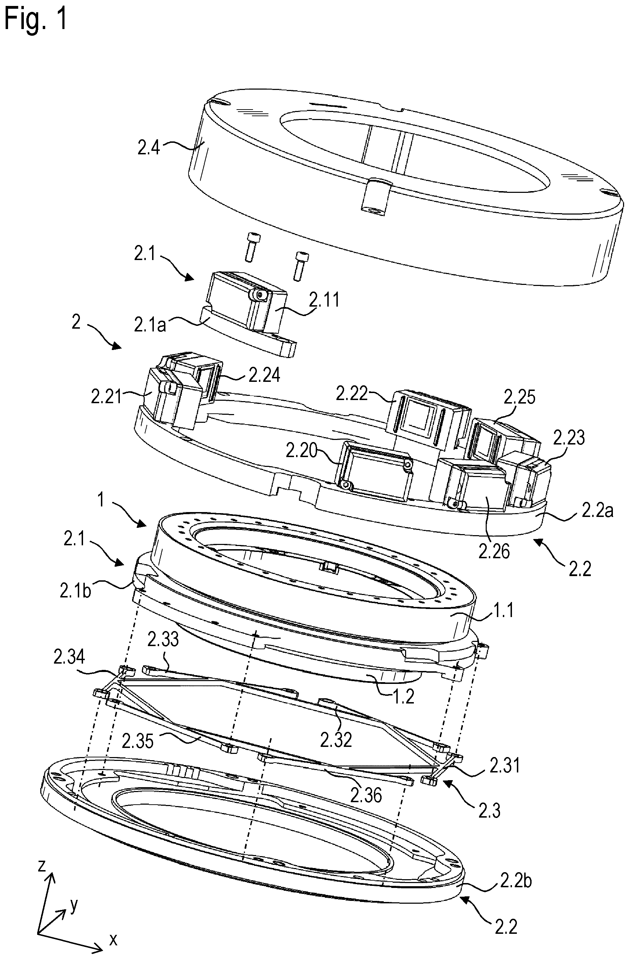

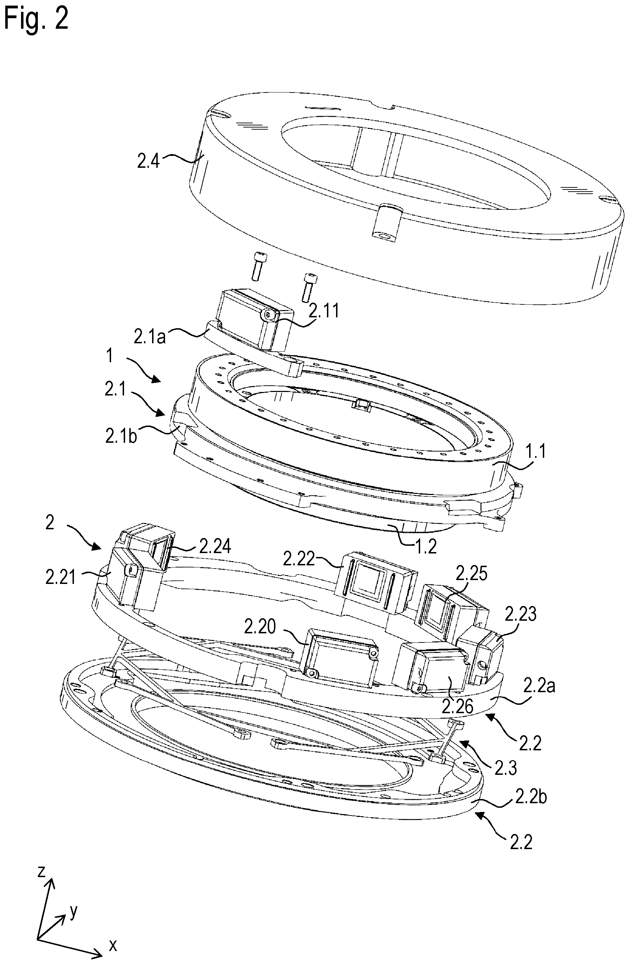

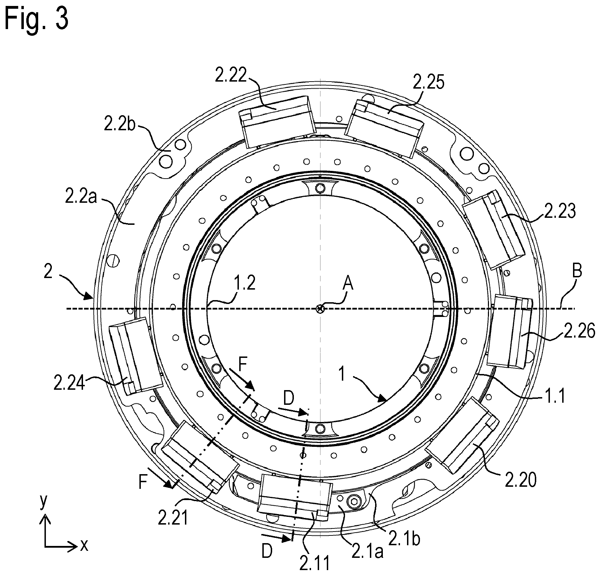

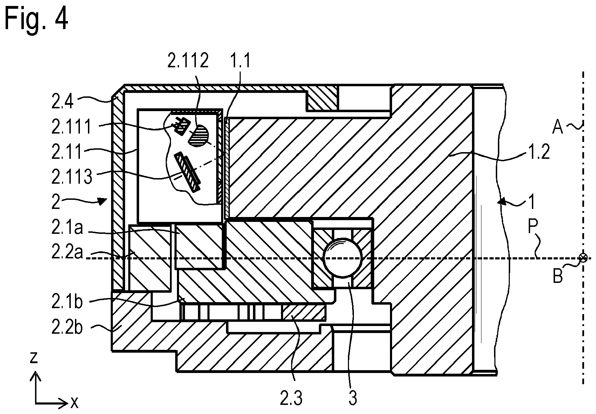

In den Figuren 1 und 2 ist jeweils eine Explosionsdarstellung der Winkelmesseinrichtung gezeigt, wie sie beispielsweise an einer Rundtischachse einer Werkzeugmaschine etwa einer Fräsmaschine eingebaut werden kann. Die Winkelmesseinrichtung umfasst eine erste Bauteilgruppe 1 und eine zweite Bauteilgruppe 2. Die erste Bauteilgruppe 1 ist gemäß der Figur 3 relativ zur zweiten Bauteilgruppe 2 um eine Drehachse A drehbar, so dass die erste Bauteilgruppe 1 dann als Rotor fungieren kann und die zweite Bauteilgruppe 2 auch als Stator bezeichnet werden kann. Zudem umfasst die Winkelmesseinrichtung gemäß der Figur 4 ein Lager 3, das hier als Wälzlager ausgestaltet ist.

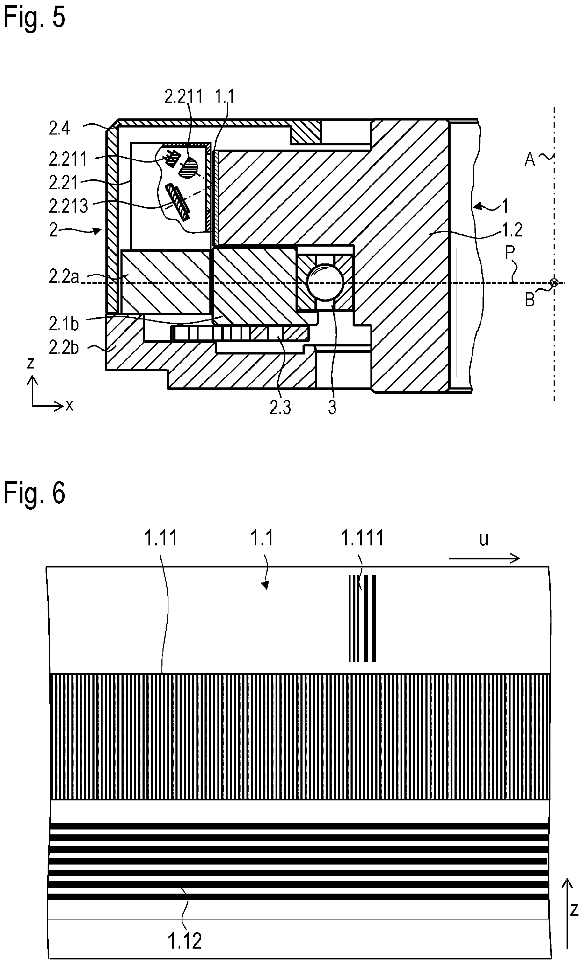

Die erste Bauteilgruppe 1 weist ein Skalenelement 1.1 auf, das an einer Nabe 1.2 drehfest fixiert ist (siehe etwa die Figuren 4 oder 5). Die Nabe 1.2 dient zur Aufnahme einer Welle, beispielsweise eines Rundtisches, so dass dann die Welle starr und drehfest mit der Nabe 1.2 verbunden ist.

Die zweite Bauteilgruppe 2 weist eine erste Baueinheit 2.1 auf, die hier zweiteilig aufgebaut ist und somit ein erstes Teil 2.1a, das hier als Befestigungsbacke bezeichnet werden kann und ein zweites Teil 2.1b umfasst, das im vorgestellten Ausführungsbeispiel als Lagerplatte bezeichnet werden kann. Am ersten Teil 2.1a ist ein Positionssensor 2.11 befestigt, der dem Skalenelement 1.1 mit einem radialen Luftspalt gegenüber liegend angeordnet ist (siehe die Figur 4).

Außerdem umfasst die zweite Bauteilgruppe 2 eine zweite Baueinheit 2.2, welche auch zweiteilig aufgebaut ist. Die zweite Baueinheit 2.2 umfasst demnach ein erstes Teil 2.2a und ein zweites Teil 2.2b, welches hier auch als Flansch bezeichnet werden kann. Unmittelbar am ersten Teil 2.2a, das als Halterungsring ausgestaltet ist, sind mehrere Positionsaufnehmer 2.20 bis 2.26 montiert. Gemäß der Figur 5 sind die Positionsaufnehmer 2.20 bis 2.26 dem Skalenelement 1.1 mit einem radialen Luftspalt gegenüber liegend angeordnet. Gemäß der hier beschriebenen Ausführungsform umfasst die Winkelmesseinrichtung im Einzelnen einen ersten Positionsaufnehmer 2.21, einen zweiten Positionsaufnehmer 2.22, einen dritten Positionsaufnehmer 2.23, einen vierten Positionsaufnehmer 2.24, einen fünften Positionsaufnehmer 2.25, einen sechsten Positionsaufnehmer 2.26 sowie einen siebten Positionsaufnehmer 2.20. Die Positionsaufnehmer 2.20 bis 2.26 sind in Umfangsrichtung u jeweils versetzt zueinander angeordnet.

Die zweite Bauteilgruppe 2 umfasst eine Ausgleichskupplung 2.3. Diese dient dazu Verschiebungen bedingt durch naturgemäße Fertigungs- und Montageungenauigkeiten auszugleichen. Mit Hilfe der Ausgleichskupplung 2.3 ist die erste Baueinheit 2.1 mit der zweiten Baueinheit 2.2 drehsteif aber axial und radial nachgiebig verbunden. Im vorgestellten Ausführungsbeispiel wird durch Schraubverbindungen, die beispielhaft in der Figur 1 durch Strichpunkt-Linien dargestellt sind, das erste Teil 2.1b der ersten Baueinheit 2.1 mit drei Laschen 2.31, 2.33, 2.35 der Ausgleichskupplung 2.3 verbunden. Dagegen wird das zweite Teil 2.2b der zweiten Baueinheit 2.2 mit den drei anderen Laschen 2.32, 2.34, 2.36 der Ausgleichskupplung 2.3 verbunden. Auf diese Weise ist der Positionssensor 2.11 relativ zu den mehreren Positionsaufnehmern 2.20 bis 2.26 drehsteif aber axial und radial nachgiebig beziehungsweise flexibel angeordnet.

Nachdem die Ausgleichskupplung 2.3 mit der ersten Baueinheit 2.1 und mit der zweiten Baueinheit 2.2 auf die oben beschriebene Weise verbunden ist kann das erste Teil 2.2a mit dem zweiten Teil 2.2b der zweiten Baueinheit 2.2 durch Schrauben verbunden werden. Danach sind der Positionssensor 2.11 sowie die Positionsaufnehmer 2.20 bis 2.26 axial auf der Höhe des Skalenelementes 1.1 angeordnet.

Anhand der Figur 1 soll insbesondere die Einbausituation der Ausgleichskupplung 2.3 verdeutlicht werden, während in der Figur 2 die Situation im Hinblick auf die zweite Baueinheit 2.2, die das erste Teil 2.2a und das zweite Teil 2.2b umfasst, veranschaulicht werden soll. Im Zuge der Montage wird die zweite Baueinheit 2.2 axial über das zweite Teil 2.1b der ersten Baueinheit 2.1 bewegt.

Zudem umfasst die zweite Bauteilgruppe 2 ein Gehäuse 2.4, welches mit dem zweiten Teil 2.2b der zweiten Baueinheit 2.2 verbunden wird und in der Regel für den Messbetrieb an einem Maschinenteil starr fixiert wird. Das Gehäuse 2.4 dient dazu den Innenraum der Winkelmesseinrichtung vor Umwelteinflüssen zu schützen. In diesem Zusammenhang sind häufig Dichtungen zwischen der Nabe 1.2 und dem Gehäuse 2.4 vorgesehen, die der Übersichtlichkeit halber in den Figuren aber nicht dargestellt sind.

Wie oben beschrieben ist im bestimmungsgemäßen Betrieb der Winkelmesseinrichtung die Nabe 1.2 starr und drehfest mit einer drehbaren Welle verbunden und das Gehäuse beziehungsweise das zweite Teil 2.2b der zweiten Baueinheit 2.2 mit einem stationärem Maschinenteil. Exzentrizitäten, Taumelbewegungen oder axiale Verschiebungen der Welle relativ zum Maschinenteil verursachen Reaktionskräfte in der Winkelmesseinrichtung insbesondere im Lager 3. Um die Höhe der Reaktionskräfte zu begrenzen ist die Ausgleichskupplung 2.3 vorgesehen, welche in radialer und axialer Richtung nachgiebig ist beziehungsweise elastisch verformbar ist. Andererseits ist die Ausgleichskupplung 2.3 drehsteif, so dass die Genauigkeit der Messung der Winkelstellung nicht beeinträchtigt ist. Der Positionssensor 2.11 ist starr mit dem zweiten Teil 2.1b der ersten Baueinheit 2.1 verbunden. Eine Verformung der Ausgleichskupplung 2.3 hat keinen Einfluss auf die Position des Positionssensors 2.11 relativ zum Skalenelement 1.1. Dagegen können die Positionsaufnehmer 2.20 bis 2.26 im Rahmen der Elastizität der Ausgleichskupplung 2.3 relativ zum Skalenelement 1.1 (axial und radial) verlagert werden.

Im vorgestellten Ausführungsbeispiel sind der Positionssensor 2.11 sowie die Positionsaufnehmer 2.20 bis 2.26 nahezu identisch aufgebaut und alle entlang einer Kreislinie angeordnet. In der Figur 4 ist eine Schnittdarstellung mit dem Positionssensor 2.11 (durch die Linie D-D in Figur 3) und in der Figur 5 eine Schnittdarstellung mit einem Positionsaufnehmer 2.21 (durch die Linie F-F in Figur 3) der Positionsaufnehmer 2.20 bis 2.26 gezeigt. Die betreffenden Positionsaufnehmer 2.11, 2.21 umfassen jeweils eine LED 2.111, 2.211, einen Kondensor 2.112, 2.212 und ein Sensorelement 2.113, 2.213. Das Sensorelement 2.113, 2.213 ist hier als ein so genannter Opto-ASIC auf einer Platine ausgestaltet. Die als Lichtquelle dienende LED 2.111, 2.211 sendet Licht durch den Kondensor 2.112, 2.212 auf das Skalenelement 1.1. Die LED 2.111, 2.211, der Kondensor 2.112, 2.212 und das Sensorelement 2.113, 2.213 sind dabei der zweiten Bauteilgruppe der Winkelmesseinrichtung 2, also dem Stator zugeordnet. Im vorgestellten Ausführungsbeispiel weist jeder Positionsaufnehmer 2.11, 2.20 bis 2.26 ein Gehäuse auf, in dem entsprechende Sensorelemente 2.113, 2.213 angeordnet sind. Alternativ dazu kann auch auf die Gehäuse verzichtet werden oder es können auch mehrere Sensorelemente in ein und demselben Gehäuse angeordnet sein. Beispielsweise können mehrere oder alle Positionsaufnehmer 2.11, 2.20 bis 2.26 auch auf ein und derselben Platine montiert sein.

Im Gegensatz dazu ist das Skalenelement 1.1, wie bereits erwähnt, an der drehbaren Nabe 1.2 befestigt. Das Skalenelement 1.1 umfasst gemäß der Figur 6 eine erste Teilung 1.11 sowie eine zweite Teilung 1.12. Das Skalenelement 1.1 ist im vorgestellten Ausführungsbeispiel als ein zylindrischer beziehungsweise ringförmiger Körper ausgebildet an dessen Mantelseite sowohl die zweite Teilung 1.12 als auch die erste Teilung 1.11 angeordnet sind, wobei die zweite Teilung 1.12 gegenüber der ersten Teilung 1.11 bezüglich der axialen Richtung z versetzt angeordnet ist.

In der Figur 6 ist ein Ausschnitt einer mantelseitigen Ansicht auf das Skalenelement 1.1 gezeigt. Die zweite Teilung 1.12 umfasst regelmäßige Strukturen beziehungsweise Linien, die entlang einer zweiten Richtung parallel zueinander aneinandergereiht angeordnet sind, wobei die zweite Richtung eine Richtungskomponente in axialer Richtung aufweist. Im vorgestellten Ausführungsbeispiel ist die zweite Richtung identisch mit der axialen Richtung z.

Die erste Teilung 1.11 umfasst regelmäßige Strukturen beziehungsweise Linien, die entlang einer zweiten Richtung parallel zueinander aneinandergereiht angeordnet sind, wobei die zweite Richtung eine Richtungskomponente in axialer Richtung aufweist. Die zweite Richtung verläuft im vorgestellten Ausführungsbeispiel parallel zur Drehachse A beziehungsweise parallel zur Richtung z. Zudem umfasst die erste Teilung 1.11 eine Referenzmarke 1.111.

Mit anderen Worten umfasst die erste Teilung 1.11 regelmäßige Strukturen, die hier als Linien ausgestaltet sind und in der zweiten Richtung orientiert und parallel zueinander angeordnet sind. Die zweite Richtung verläuft im vorgestellten Ausführungsbeispiel parallel zur Drehachse A beziehungsweise parallel zur Richtung z. Die zweite Teilung 1.12 umfasst ebenfalls regelmäßige Strukturen, die hier umlaufend ausgestaltet sind und deren umlaufende Längsseiten in der ersten Richtung orientiert und parallel zueinander angeordnet sind. Die erste Richtung verläuft in Umfangsrichtung u.

Die Strukturen der ersten Teilung 1.11 und die der zweiten Teilung 1.12 sind im vorgestellten Ausführungsbeispiel für Licht als reflektierende und nicht reflektierende Streifen ausgestaltet. Das Skalenelement 1.1 vermag durch seine erste Teilung 1.11 das eingestrahlte Licht entsprechend der Winkelstellung des Skalenelements 1.1 beziehungsweise der Nabe 1.2 zu modulieren. Durch die zweite Teilung 1.12 wird das eingestrahlte Licht entsprechend der axialen Position des Skalenelements 1.1 beziehungsweise der Nabe 1.2 moduliert. Das modulierte Licht trifft schließlich in den Figuren 4 und 5 auf Fotodetektoren der Sensorelemente 2.113, 2.213.

Durch den Positionssensor 2.11 ist die erste Teilung 1.11 in der Weise abtastbar, dass durch den Positionssensor 2.11 eine Winkelstellung des Skalenelements 1.1 in Bezug auf die Positionssensor 2.11 bestimmbar ist. Dabei kann die Winkelstellung innerhalb einer Umdrehung hinweg absolut bestimmt werden. Zu diesem Zweck kann wie in der Figur 6 gezeigt eine an sich inkrementale erste Teilung 1.11 verwendet werden, durch die in Verbindung mit der Referenzmarke 1.111 eine absolute Winkelstellung über eine Umdrehung hinweg erzeugbar ist. Alternativ kann die erste Teilung 1.11 absolut, zum Beispiel als Pseudo-Random-Code oder Gray-Code, im Sinne einer Codierung, also mit einer Erzeugung eines eindeutigen Codewerts ausgestaltet sein. Die Signale des Positionssensors 2.11 werden zu einem elektronischen Baustein, der an geeigneter Stelle in der zweiten Bauteilgruppe 2 montiert ist, geleitet. Die insbesondere digitalen Werte der Winkelstellung werden dann von dem elektronischen Baustein erzeugt. Ebenso sind die Positionsaufnehmer 2.20 bis 2.26 mit dem elektronischen Baustein elektrisch verbunden. Die Positionsaufnehmer 2.20 bis 2.26 sind gemäß der Figur 3 im Grundsatz paarweise angeordnet (erstes Paar 2.21, 2.24, zweites Paar 2.22, 2.25, drittes Paar 2.23, 2.26). Im vorgestellten Ausführungsbeispiel wird durch den ersten Positionsaufnehmer 2.21, den zweiten Positionsaufnehmer 2.22 und den dritten Positionsaufnehmer 2.23 die erste Teilung 1.11 abgetastet.

Durch den vierten Positionsaufnehmer 2.24, den fünften Positionsaufnehmer 2.25 und den sechsten Positionsaufnehmer 2.26 wird die zweite Teilung 1.12 abgetastet, wobei durch diese Positionsaufnehmer 2.24, 2.25, 2.26. auch die axiale Position des Skalenelements 1.1 bestimmbar ist. Der nicht zu einem der vorgenannten Paare gehörende Positionsaufnehmer 2.20 dient ebenfalls zur Abtastung der ersten Teilung 1.11 zur Durchführung eines hier nicht näher beschriebenen Verfahrens zur Ermittlung eines Korrekturwertes.

Im elektronischen Baustein wird auch der axialen Position die absolute Winkelstellung der Nabe 1.2 zugeordnet.

Durch eine geeignete Verknüpfung der Positionssignale des ersten Positionsaufnehmers 2.21, des zweiten Positionsaufnehmers 2.22 und des dritten Positionsaufnehmers 2.23 im dem elektronischen Baustein kann die Position des Skalenelements 1.1 in einer Ebene P, die senkrecht zur Drehachse A orientiert ist, bestimmt werden, also die x, y Koordinaten der tatsächlichen Lage der Drehachse A. Diese Position, die auch als laterale Position bezeichnet werden kann, hängt bei dem gegebenen Rundtisch von der Belastung während der Bearbeitung ab. Zudem wird der aktuellen lateralen Position auch die absolute Winkelstellung der Nabe 1.2 zugeordnet.

Mit der Winkelmesseinrichtung kann auch durch eine geeignete Verknüpfung der Positionssignale des vierten Positionsaufnehmers 2.24, des fünften Positionsaufnehmers 2.26 und des sechsten Positionsaufnehmers 2.26 das Ausmaß einer Verkippung des Skalenelements 1.1 um eine Kippachse B, die in einer Ebene P liegt, bestimmt werden sowie das Ausmaß und die Richtung von Taumelbewegungen. Die Ebene P ist senkrecht zur Drehachse A orientiert.

Durch die Winkelmesseinrichtung ist es möglich insbesondere bei Rundtischen die absolute Winkelstellung der Nabe 1.2 zu bestimmen und in Abhängigkeit von der absoluten Winkelstellung die laterale und axiale Position der Nabe 1.2 zu messen. Dadurch, dass die genannten Rundtische ohnehin sehr steif konstruiert sind, werden hier Positionsmessungen durchgeführt, die sich im µm-Bereich oder weniger bewegen. Daher ist eine hohe Auflösung insbesondere des Positionssensors 2.11 sowie der Positionsaufnehmer 2.20 bis 2.26 erforderlich. Ebenso können Verkippungen der Drehachse A relativ zum Gehäuse 2.2 um die Kippachse B gemessen werden.

Die weiterverarbeiteten Positionssignale werden schließlich über ein Kabel an ein weiteres Gerät ausgegeben, z. B. an eine Steuerungseinrichtung einer Maschine.

Der Positionssensor 2.11 sowie die Positionsaufnehmer 2.20 bis 2.26 sind also im vorgestellten Ausführungsbeispiel Positionsaufnehmer, welche eine Winkelposition oder eine axiale Position erfassen.

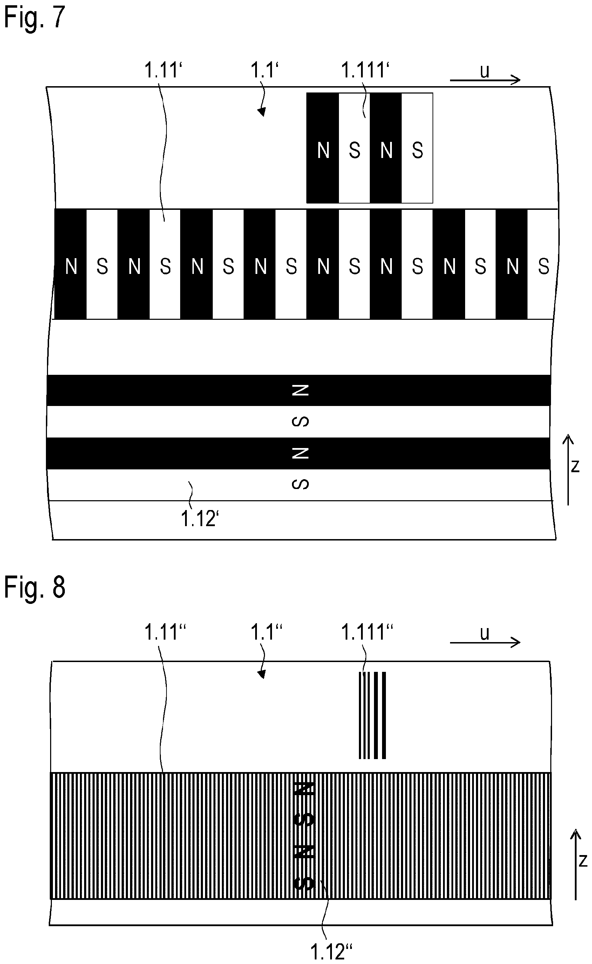

Gemäß einem zweiten Ausführungsbeispiel nach der Figur 7, die ebenfalls eine mantelseitige Ansicht auf ein Skalenelement 1.1' zeigt, umfasst das Skalenelement 1.1' eine erste Teilung 1.11', die regelmäßige Strukturen beziehungsweise Linien (in der Figur schwarze und weiße Rechtecke) aufweist, die entlang der ersten Richtung parallel zueinander aneinandergereiht angeordnet sind, wobei die erste Richtung eine Richtungskomponente in Umfangsrichtung u aufweist. Im vorgestellten Ausführungsbeispiel ist die erste Richtung identisch mit der Umfangsrichtung u. Zudem umfasst die erste Teilung 1.11' eine Referenzmarke 1.111'.

Die zweite Teilung 1.12' umfasst regelmäßige Strukturen beziehungsweise Linien (in der Figur schwarze und weiße Rechtecke), die entlang der zweiten Richtung parallel zueinander aneinandergereiht angeordnet sind, wobei die zweite Richtung eine Richtungskomponente in axialer Richtung aufweist. Im vorgestellten Ausführungsbeispiel ist die zweite Richtung identisch mit der axialen Richtung z.

Die Strukturen im vorgestellten zweiten Ausführungsbeispiel sind als magnetische Nord- und Südpole ausgestaltet.

Dementsprechend sind im zweiten Ausführungsbeispiel der Positionssensor sowie die Positionsaufnehmer als magnetische Aufnehmer ausgestaltet. Im vorgestellten Ausführungsbeispiel weisen der Positionssensor und die Positionsaufnehmer magnetoresistive Detektoren auf. Insbesondere können diese als magnetoresistive Strukturen auf einem Glassubstrat ausgestaltet sein.

Anhand der Figur 8 wird ein drittes Ausführungsbeispiel erläutert. Die Figur 8 zeigt eine mantelseitige Ansicht auf ein Skalenelement 1.1", welches in axialer Richtung eine vergleichsweise geringe Ausdehnung aufweist. Das Skalenelement 1.1" umfasst eine erste Teilung 1.11", die aus regelmäßigen Strukturen beziehungsweise Linien, die entlang der ersten Richtung parallel zueinander aneinandergereiht angeordnet sind, wobei die erste Richtung eine Richtungskomponente in Umfangsrichtung u aufweist. Im vorgestellten dritten Ausführungsbeispiel ist die erste Richtung identisch mit der Umfangsrichtung u. Zudem umfasst die erste Teilung 1.11" eine Referenzmarke 1.111", welche ebenfalls aus Strukturen beziehungsweise Linien besteht. Die Strukturen der ersten Teilung 1.11" und der Referenzmarke 1.111" sind als für Licht reflektierende und nicht reflektierende Streifen ausgestaltet analog zum ersten Ausführungsbeispiel.

Dagegen umfasst die zweite Teilung 1.12" regelmäßige Strukturen beziehungsweise Linien die entlang der zweiten Richtung parallel zueinander aneinandergereiht angeordnet sind, wobei die zweite Richtung eine Richtungskomponente in axialer Richtung aufweist. Im vorgestellten Ausführungsbeispiel ist die zweite Richtung identisch mit der axialen Richtung z. Die umlaufenden Strukturen (vergleichbar mit der magnetischen Teilung 1.12' des zweiten Ausführungsbeispiels) der zweiten Teilung 1.12" sind im vorgestellten Ausführungsbeispiel als magnetische Nord- und Südpole ausgestaltet. Die erste Teilung 1.11" und die zweite Teilung 1.12" sind zumindest teilweise überlagert angeordnet, so dass der axiale Platzbedarf für die erste Teilung 1.11" und die zweite Teilung 1.12" reduziert werden kann. Diese Bauweise hat auch den Vorteil, dass Verkippungen um die Kippachse B kaum Einfluss auf die Messung haben, weil beide Teilungen 1.11", 1.12" nahezu auf der gleichen axialen Höhe beziehungsweise auf ein und demselben Umfangsbereich abgetastet werden.

Der Positionssensor 2.11 kann dann entsprechend der Figur 4 die erste Teilung 1.11" nach einem optischen Prinzip abtasten, während die Positionsaufnehmer nach einem magnetischen Prinzip arbeiten. Somit wird im dritten Ausführungsbeispiel die Winkelstellung optisch erfasst und die Verkippung des Skalenelements 1.1" beziehungsweise die Verlagerung des Skalenelements 1.1" in der Ebene P durch ein magnetisches Prinzip.

## Patentansprüche

1. Winkelmesseinrichtung umfassend eine erste Bauteilgruppe (1), eine zweite Bauteilgruppe (2) sowie ein Lager (3), wobei die Bauteilgruppen (1, 2) relativ zueinander um eine Drehachse (A) durch das Lager (3) drehbar angeordnet sind, wobei
- die erste Bauteilgruppe (1) ein Skalenelement (1.1; 1.1'; 1.1") umfasst, das eine erste Teilung (1.11; 1.11'; 1.11") sowie eine zweite Teilung (1.12; 1.12'; 1.12") aufweist, wobei
die erste Teilung (2.11) regelmäßige Strukturen umfasst, die entlang einer ersten Richtung parallel zueinander aneinandergereiht angeordnet sind, wobei die erste Richtung eine Richtungskomponente in Umfangsrichtung (u) aufweist und
die zweite Teilung (1.12; 1.12'; 1.12") regelmäßige Strukturen umfasst, die entlang einer zweiten Richtung parallel zueinander aneinandergereiht angeordnet sind, wobei die zweite Richtung eine Richtungskomponente in axialer Richtung (z) aufweist,
- die zweite Bauteilgruppe (2)
eine erste Baueinheit (2.1) aufweist, die einen Positionssensor (2.11) aufweist, der dem Skalenelement (1.1; 1.1'; 1.1") mit einem Luftspalt gegenüber liegend angeordnet ist, und
eine zweite Baueinheit (2.2) aufweist, die einen ersten, zweiten, dritten, vierten, fünften und sechsten Positionsaufnehmer (2.21, 2.22, 2.23, 2.24, 2.25, 2.26) aufweist, die dem Skalenelement (1.1; 1.1'; 1.1") mit einem Luftspalt gegenüber liegend angeordnet sind,
eine Ausgleichskupplung (2.3) aufweist, wobei durch den Positionssensor (2.11) die erste Teilung (1.11; 1.11'; 1.11") zur Bestimmung der relativen Winkelstellung zwischen den Bauteilgruppen (1, 2) abtastbar ist, und
durch den ersten, zweiten und dritten Positionsaufnehmer (2.21, 2.22, 2.23) die erste Teilung (1.11; 1.11'; 1.11") oder eine am Skalenelement (1.1; 1.1'; 1.1") angeordnete weitere Teilung zur Bestimmung einer Verschiebung des Skalenelements (1.1; 1.1'; 1.1") in einer Ebene (P), die orthogonal zur Drehachse orientiert ist, abtastbar ist und
durch den vierten, fünften und sechsten Positionsaufnehmer (2.24, 2.25, 2.26) die zweite Teilung (1.12; 1.12'; 1.12") abtastbar ist zur Bestimmung einer Verkippung des Skalenelements (1.1; 1.1'; 1.1") um eine Kippachse (B), die in beziehungsweise parallel zu der Ebene (P) liegt, wobei
die erste Baueinheit (2.1) mit Hilfe der Ausgleichskupplung (2.3) mit der zweiten Baueinheit (2.2) drehsteif aber axial und radial nachgiebig verbunden ist, so dass der Positionssensor (2.11) relativ zu den Positionsaufnehmern (2.21, 2.22, 2.23, 2.24, 2.25, 2.26) drehsteif aber axial und radial nachgiebig angeordnet ist.

2. Winkelmesseinrichtung gemäß dem Anspruch 1, wobei die zweite Bauteilgruppe (2) eine Lichtquelle (2.211) aufweist und die erste Teilung (1.11; 1.11'; 1.11") und der Positionssensor (2.11) so ausgestaltet sind, dass die relative Winkelstellung zwischen den Bauteilgruppen (1, 2) durch ein optisches Prinzip bestimmbar ist.

3. Winkelmesseinrichtung gemäß einem der vorhergehenden Ansprüche, wobei die Verschiebung des Skalenelements (1.1; 1.1'; 1.1") in der Ebene (P) durch ein magnetisches Prinzip bestimmbar ist.

4. Winkelmesseinrichtung gemäß einem der vorhergehenden Ansprüche, wobei die erste Teilung (1.11") und die zweite Teilung (1.12") zumindest teilweise überlagert angeordnet sind.

5. Winkelmesseinrichtung gemäß einem der vorhergehenden Ansprüche, wobei zumindest zwei der Positionsaufnehmer (2.21, 2.22, 2.23) zur Bestimmung einer Verschiebung des Skalenelements (1.1; 1.1'; 1.1") in einem Zentriwinkel um die Drehachse (A) von mindestens 90° versetzt angeordnet sind.

6. Winkelmesseinrichtung gemäß einem der vorhergehenden Ansprüche, wobei zumindest zwei der Positionsaufnehmer (2.24, 2.25, 2.26) zur Bestimmung einer Verkippung des Skalenelements (1.1; 1.1'; 1.1") um die Kippachse (B) in einem Zentriwinkel um die Drehachse (A) von mindestens 90° versetzt angeordnet sind.

7. Winkelmesseinrichtung gemäß einem der vorhergehenden Ansprüche, wobei zumindest drei der Positionsaufnehmer (2.20 bis 2.26) entlang einer Kreislinie angeordnet sind.

8. Winkelmesseinrichtung gemäß einem der vorhergehenden Ansprüche, wobei die zweite Bauteilgruppe (2) ein Gehäuse (2.4) umfasst und der Positionssensor (2.11) sowie die mehreren Positionsaufnehmer (2.20 bis 2.26) innerhalb des Gehäuses (2.4) angeordnet sind.

9. Winkelmesseinrichtung gemäß einem der vorhergehenden Ansprüche, wobei das Skalenelement (1.1; 1.1'; 1.1") eine zylindrische Form aufweist und die erste Teilung (1.11) und / oder die zweite Teilung (1.12; 1.12'; 1.12") auf einer Mantelseite des Skalenelementes (1.1; 1.1'; 1.1") aufgebracht ist.

10. Winkelmesseinrichtung gemäß einem der vorhergehenden Ansprüche, wobei der Positionssensor (2.11) gegenüber den vierten, fünften und sechsten Positionsaufnehmern (2.24, 2.25, 2.26) bezüglich der axialen Richtung (z) versetzt angeordnet ist.

## Claims

1. Angle measuring device, comprising a first component group (1), a second component group (2) and a bearing (3), the component groups (1, 2) being rotatable relative to one another about an axis of rotation (A) by means of the bearing (3), wherein
- the first component group (1) comprises a scale element (1.1; 1.1'; 1.1"), which has a first graduation (1.11; 1.11'; 1.11") and a second graduation (1.12; 1.12'; 1.12"), wherein
the first graduation (2.11) comprises regular structures which are arranged in series parallel to one another along a first direction, the first direction having a directional component in a circumferential direction (u), and
the second graduation (1.12; 1.12'; 1.12") comprises regular structures which are arranged in series parallel to one another along a second direction, the second direction having a directional component in an axial direction (z),
- the second component group (2)
has a first structural unit (2.1), which has a position sensor (2.11), which is arranged lying opposite the scale element (1.1; 1.1'; 1.1") with an air gap, and
has a second structural unit (2.2), which has a first, second, third, fourth, fifth and sixth position transducer (2.21, 2.22, 2.23, 2.24, 2.25, 2.26), which are arranged lying opposite the scale element (1.1; 1.1'; 1.1") with an air gap,
has a compensating coupling (2.3); wherein
the first graduation (1.11; 1.11'; 1.11") can be scanned by the position sensor (2.11) to determine the relative angular position between the component groups (1, 2), and
the first graduation (1.11; 1.11'; 1.11") or a further graduation arranged on the scale element (1.1; 1.1'; 1.1") can be scanned by the first, second and third position transducers (2.21, 2.22, 2.23) to determine a displacement of the scale element (1.1; 1.1'; 1.1") in a plane (P), which is oriented orthogonally in relation to the axis of rotation, and
the second graduation (1.12; 1.12'; 1.12") can be scanned by the fourth, fifth and sixth position transducers (2.24, 2.25, 2.26) to determine tilting of the scale element (1.1; 1.1'; 1.1") about a tilting axis (B), which lies in or parallel to the plane (P); wherein
the first structural unit (2.1) is connected to the second structural unit (2.2) by the compensating coupling (2.3) in a torsionally stiff but axially and radially flexible manner, so that the position sensor (2.11) is arranged in a torsionally stiff but axially and radially flexible manner relative to the position transducers (2.21, 2.22, 2.23, 2.24, 2.25, 2.26).

2. Angle measuring device according to Claim 1, wherein the first component group (2) has a light source (2.211) and the first graduation (1.11; 1.11'; 1.11") and the position sensor (2.11) are arranged such that the relative angular position between the component groups (1, 2) is determinable by an optical principle.

3. Angle measuring device according to one of the preceding claims, wherein the displacement of the scale element (1.1; 1.1'; 1.1") in the plane (P) is determinable by a magnetic principle.

4. Angle measuring device according to one of the preceding claims, wherein the first graduation (1.11") and the second graduation (1.12") are arranged at least partially superposed.

5. Angle measuring device according to one of the preceding claims, wherein at least two of the position transducers (2.21, 2.22, 2.23) are arranged offset at a central angle about the axis of rotation (A) of at least 90° to determine a displacement of the scale element (1.1; 1.1'; 1.1").

6. Angle measuring device according to one of the preceding claims, wherein at least two of the position transducers (2.24, 2.25, 2.26) are arranged offset at a central angle about the axis of rotation (A) of at least 90° to determine a tilting of the scale element (1.1; 1.1'; 1.1") about the tilting axis (B).

7. Angle measuring device according to one of the preceding claims, wherein at least three of the position transducers (2.20 to 2.26) are arranged along a circular line.

8. Angle measuring device according to one of the preceding claims, wherein the second component group (2) comprises a housing (2.4), and the position sensor (2.11) and the multiple position transducers (2.20 to 2.26) are arranged inside the housing (2.4).

9. Angle measuring device according to one of the preceding claims, wherein the scale element (1.1; 141'; 1.1") has a cylindrical form, and the first graduation (1.11) and/or the second graduation (1.12; 1.12'; 1.12") is applied on a lateral surface of the scale element (1.1; 1.1'; 1.1").

10. Angle measuring device according to one of the preceding claims, wherein the position sensor (2.11) is arranged offset in relation to the fourth, fifth, and sixth position transducers (2.24, 2.25, 2.26) with respect to the axial direction (z).

## Revendications

1. Dispositif de mesure d'angle comportant un premier groupe de composants (1), un deuxième groupe de composants (2) ainsi qu'un palier (3), les groupes de composants (1, 2) étant disposés de manière à pouvoir tourner l'un par rapport à l'autre autour d'un axe de rotation (A) par le biais du palier (3),
- le premier groupe de composants (1) comportant un élément à échelle (1.1 ; 1.1' ; 1.1") qui comprend une première graduation (1.11 ; 1.11' ; 1.11") ainsi qu'une deuxième graduation (1.12 ; 1.12' ; 1.12"),
la première graduation (2.11) comportant des structures régulières qui sont disposées en rangée parallèlement les unes aux autres le long d'une première direction, la première direction présentant une composante directionnelle dans la direction circonférentielle (u), et
la deuxième graduation (1.12 ; 1.12' ; 1.12") comportant des structures régulières qui sont disposées en rangée parallèlement les unes aux autres le long d'une deuxième direction, la deuxième direction présentant une composante directionnelle dans la direction axiale (z),
- le deuxième groupe de composants (2) comprenant une première unité structurale (2.1) qui comprend un détecteur de position (2.11) qui est disposé en regard de l'élément à échelle (1.1 ; 1.1' ; 1.1") avec un espace d'air, et
comprenant une deuxième unité structurale (2.2) qui comprend un premier, un deuxième, un troisième, un quatrième, un cinquième et un sixième capteur de position (2.21, 2.22, 2.23, 2.24, 2.25, 2.26) qui sont disposés en regard de l'élément à échelle (1.1 ; 1.1' ; 1.1") avec un espace d'air,
comprenant un accouplement de compensation (2.3),
le détecteur de position (2.11) pouvant balayer la première graduation (1.11 ; 1.11' ; 1.11") pour la détermination de la position angulaire relative entre les groupes de composants (1, 2), et
les premier, deuxième et troisième capteurs de position (2.21, 2.22, 2.23) pouvant balayer la première graduation (1.11 ; 1.11' ; 1.11") ou une autre graduation disposée sur l'élément à échelle (1.1 ; 1.1' ; 1.1") pour la détermination d'un déplacement de l'élément à échelle (1.1 ; 1.1' ; 1.1") dans un plan (P) qui est orienté perpendiculairement à l'axe de rotation et
les quatrième, cinquième et sixième capteurs de position (2.24, 2.25, 2.26) pouvant balayer la deuxième graduation (1.12 ; 1.12' ; 1.12") pour la détermination d'une inclinaison de l'élément à échelle (1.1 ; 1.1' ; 1.1") autour d'un axe d'inclinaison (B) qui se situe dans le plan (P) ou parallèlement à celui-ci,
la première unité structurale (2.1) étant reliée à la deuxième unité structurale (2.2) de manière rigide la torsion mais flexible axialement et radialement à l'aide de l'accouplement de compensation (2.3), de sorte que le détecteur de position (2.11) soit disposé de manière rigide à la torsion mais flexible axialement et radialement par rapport aux capteurs de position (2.21, 2.22, 2.23, 2.24, 2.25, 2.26).

2. Dispositif de mesure d'angle selon la revendication 1, le deuxième groupe de composants (2) comprenant une source de lumière (2.211) et la première graduation (1.11 ; 1.11' ; 1.11") et le détecteur de position (2.11) étant configurés de telle sorte que la position angulaire relative entre les groupes de composants (1, 2) puisse être déterminée par un principe optique.

3. Dispositif de mesure d'angle selon l'une des revendications précédentes, le déplacement de l'élément à échelle (1.1 ; 1.1' ; 1.1") dans le plan (P) pouvant être déterminé par un principe magnétique.

4. Dispositif de mesure d'angle selon l'une des revendications précédentes, la première graduation (1.11") et la deuxième graduation (1.12") étant disposées au moins partiellement de manière superposée.

5. Dispositif de mesure d'angle selon l'une des revendications précédentes, au moins deux des capteurs de position (2.21, 2.22, 2.23) étant disposés de manière décalée d'au moins 90° suivant un angle de centrage autour de l'axe de rotation (A) pour la détermination d'un déplacement de l'élément à échelle (1.1 ; 1.1' ; 1.1") .

6. Dispositif de mesure d'angle selon l'une des revendications précédentes, au moins deux des capteurs de position (2.24, 2.25, 2.26) étant disposés de manière décalée d'au moins 90° suivant un angle de centrage autour de l'axe de rotation (A) pour la détermination d'une inclinaison de l'élément à échelle (1.1 ; 1.1' ; 1.1") autour de l'axe d'inclinaison (B).

7. Dispositif de mesure d'angle selon l'une des revendications précédentes, au moins trois des capteurs de position (2.20 à 2.26) étant disposés le long d'une ligne circulaire.

8. Dispositif de mesure d'angle selon l'une des revendications précédentes, le deuxième groupe de composants (2) comportant un boîtier (2.4) et le détecteur de position (2.11) ainsi que les plusieurs capteurs de position (2.20 à 2.26) étant disposés à l'intérieur du boîtier (2.4).

9. Dispositif de mesure d'angle selon l'une des revendications précédentes, l'élément à échelle (1.1 ; 1.1' ; 1.1") présentant une forme cylindrique et la première graduation (1.11) et/ou la deuxième graduation (1.12 ; 1.12' ; 1.12") étant appliquées sur un côté d'enveloppe de l'élément à échelle (1.1 ; 1.1' ; 1.1").

10. Dispositif de mesure d'angle selon l'une des revendications précédentes, le détecteur de position (2.11) étant disposé de manière décalée par rapport aux quatrième, cinquième et sixième capteurs de position (2.24, 2.25, 2.26) par rapport à la direction axiale (z).
